(19)

**Europäisches Patentamt**
**European Patent Office**
**Office européen des brevets**

(11)  **EP 4 779 361 A1**

(12)  **EUROPEAN PATENT APPLICATION**

(43) Date of publication:
**22.07.2026 Bulletin 2026/30**

(21) Application number: **26152110.8**

(22) Date of filing: **15.01.2026**

(51) International Patent Classification (IPC):
*G01V 1/28* (2006.01)

(52) Cooperative Patent Classification (CPC):
**G01V 1/28; G01V 1/282;** G01V 2210/67;
G01V 2210/679

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.01.2025 US 202563745371 P**

(71) Applicants:
• **Services Pétroliers Schlumberger**
**75007 Paris (FR)**
Designated Contracting States:
**FR**

• **GeoQuest Systems B.V.**
**2514 JG The Hague (NL)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **FLETCHER, Robin**
**Houston, 77042 (US)**
• **CAVALCA, Maud**
**Houston, 77042 (US)**

(74) Representative: **Schlumberger Intellectual
Property Department
Parkstraat 83
2514 JG Den Haag (NL)**

(54)  **METHOD FOR REDUCING A COMPUTATIONAL COST FOR IMPROVING SUBSURFACE IMAGES WITH DENSE POINT SPREAD FUNCTIONS USING ENCODED BORN MODELLING AND ATTRIBUTE MIGRATION**

(57)  A method for improving subsurface images includes receiving data from at least one source and one receiver disposed at a subsurface location. The method may include representing the subsurface location with a dense grid of point scatterers, calculating a wavefield of the source based on the position of the source within the subsurface location, calculating a wavefield of the receiver based on the position of the receiver within the subsurface location and on the grid of point scatterers, and forming an unweighted image of point spread functions (PSFs). The method may also include forming a weighted image of PSFs. The method may also include calculating an image of the weight based on the weighted image of PSFs and the unweighted image of PSFs, and generating a partitioned image of PSFs based on the image of the weight, thereby preventing PSFs from overlapping and improving images of the subsurface location.

500 ⟍

RECEIVING DATA FROM AT LEAST A SOURCE AND A RECEIVER AT SUBSURFACE LOCATION
502

REPRESENTING THE SUBSURFACE LOCATION WITH A SET OF POINT SCATTERERS
504

CALCULATING A FORWARD MODEL OF A WAVEFIELD OF THE SOURCE
506

CALCULATING A WAVEFIELD OF THE RECEIVER
508

CALCULATING A WEIGHTED WAVEFIELD OF THE RECEIVER
510

CALCULATING AN IMAGE OF THE WEIGHT
512

GENERATING A PARTITIONED IMAGE OF POINT SPREAD FUNCTIONS
514

IMPROVING AN IMAGE OF THE SUBSURFACE
516

PERFORMING AN ACTION BASED ON THE IMPROVED IMAGE OF THE SUBSURFACE
518

**FIG. 5**

**EP 4 779 361 A1**

## Description

### Cross-Reference to Related Applications

This application claims priority to U.S. Provisional Patent Application No. 63/745,371, filed on January 15, 2025, which is incorporated by reference.

### Background

A reservoir is a subsurface formation that can be characterized at least in part by its porosity and fluid permeability. As an example, a reservoir may be part of a basin such as a sedimentary basin. A basin can be a depression (e.g., caused by plate tectonic activity, subsidence, etc.) in which sediments accumulate. As an example, where hydrocarbon source rocks occur in combination with appropriate depth and duration of burial, a petroleum system may develop within a basin, which may form a reservoir that includes hydrocarbon fluids (e.g., oil, gas, etc.).

When imaging reservoirs or other subsurface features, least-squares migration in the image domain (LSMi) and depth domain inversion (DDI) are technologies that account for the effects of uneven dip-dependent illumination and resolution, caused by irregular acquisitions and velocity model complexity, present in migrated images. In certain embodiments, they may be implemented through calculation and inversion of point spread functions (PSFs), the impulse response of Born modelling followed by migration. LSMi and DDI may be used to solve problems with amplitude variations on finer and finer wavelengths. This is particularly true for time-lapse prestack inversions at targeted reservoirs.

When correcting wavefield extrapolation migrated images, such as reverse-time migration (RTM), multiple PSFs may be computed at once by modelling and migration of a grid of point scatterers and then cutting the PSFs out from the resultant image(s). This may be correct under a single scattering assumption (smooth velocity models), but can also be helpful to make computation affordable and performed even when using models with high velocity contrasts present. Scatterers are routinely encoded with alternating polarity to reduce the imprint of multiple scattering effects.

The spatial sampling of the point scatterers is typically set based on some multiple of the maximum dominant wavelength, such that the PSFs can be cleanly cut out from the image without contamination from neighbouring PSFs (i.e. non-overlapping PSFs). This spacing of scatterers becomes coarser the more severe the illumination problems, particularly highlighted on partitioned images, e.g. surface offset gathers or angle gathers. If the wavelength of the illumination problem is finer than the spacing of scatterers, the solution may be currently limited to the independent computation of interleaved grids of PSFs to address the problem. This linearly increases the cost of computing necessary PSFs with the number of interleaved grids employed. For example, increasing the resolution of PSF sampling by a factor of 2 in 3D implies 8 times more computation.

What is needed is an approach to compute "overlapping" PSFs at a significantly reduced cost to employing independent computation of interleaved grids of PSFs. At its heart, this approach should rely on encoding the point scatterers in Born modelling and then using "attribute migration" to separate out the encoded PSFs.

### Summary

In certain embodiments, a method is provided for improving subsurface images. The method may include receiving data from at least a source and at least a receiver disposed at a subsurface location and calculating a wavefield of the receiver based on the data and a set of point scatterers representing the subsurface location. The data may include the position of the source, the position of the receiver as well as the characteristics of the signal generated by the source. The method may also include calculating a weighted wavefield of the receiver where the weight characterizes each of the point scatterers in the subsurface. The method may further include calculating an image of a weight based on the wavefield of the receiver and the weighted wavefield of the receiver and generating a partitioned image of point spread functions (PSFs) based on the image of the weight. The method may further include utilizing the partitioned image of PSFs to improve an image of the subsurface location.

In certain embodiments, a computing system is provided. The computing system includes one or more processors and a memory system comprising one or more non-transitory computer-readable media storing instructions that, when executed by at least one of the one or more processors, cause the computing system to perform operations. The operations include receiving data from at least a source and at least a receiver disposed at a subsurface location, representing the subsurface location with a set of point scatterers, calculating a wavefield of the receiver based on the set of point scatterers, and calculating a weighted wavefield of the receiver based on a weighted set of point scatterers. The operations may also include forming a weighted image of point spread functions (PSFs) based upon the weighted wavefield of the receiver and forming an unweighted image of PSFs based upon the wavefield of the receiver. The operations may also include calculating an image of the weight based on the weighted image of PSFs and the unweighted image of PSFs. The operations may also include generating a partitioned image of PSFs based on the image of the weight and employing it to improve an image of the subsurface location.

In certain embodiments, a non-transitory computer-readable medium is provided storing instructions that, when executed by one or more processors of a computing system, cause the computing system to perform operations. The operations include receiving data from at least one source and at least a receiver disposed at a subsurface location, representing the subsurface location with a set of point scatterers, and calculating a forward model of a wavefield of the source. The operations may also include calculating a wavefield of the receiver based on the set of point scatterers. Calculating the wavefield of the receiver may include generating a first set of Born modelled data from the set of point scatterers and backpropagating the first set of Born modelled data to form an image comprising a plurality of unweighted point spread functions (PSFs). The method may also include calculating a weighted wavefield of the receiver based on the set of point scatterers. Calculating the weighted wavefield of the receiver may include encoding the set of point scatterers with a weight characterizing each of the point scatterers to form a weighted set of point scatterers, generating a second set of Born modelled data from the weighted set of point scatterers, and backpropagating the second set of Born modelled data to form an image comprising a plurality of weighted PSFs. The operations may also include calculating an image of the weight based on the plurality of weighted PSFs from the weighted wavefield of the receiver and the plurality of unweighted PSFs from the wavefield of the receiver. Calculating the image of the weight may include combining or cross-correlating the forward model of the wavefield of the source with the weighted wavefield of the receiver to obtain a first input, combining or cross-correlating the forward model of the wavefield of the source with the wavefield of the receiver to obtain a second input, and dividing the first input by the second input. The operations may further include generating a partitioned image of PSFs. Generating the partitioned image of PSFs may include binning the image comprising the plurality of unweighted PSFs based on the image of the weight, separating out any overlapping PSFs. The operations may also include improving an image of the subsurface location. Improving an image of the subsurface location may include extracting PSFs from the partitioned image of PSFs and using them in a forward modelling or inversion scheme to improve an image of the subsurface location. The operations may also include performing an action based on the improved image of the subsurface location. Performing the action may include generating or transmitting a signal that instructs or causes an action to occur. The action may include a physical action. The physical action may include varying the seismic acquisition system used to acquire seismic data (for instance source and receiver positions, type of source being used), varying a weight or torque on a drill bit that is drilling a wellbore, varying a trajectory of the wellbore, varying a rate or concentration of a fluid being pumped into the wellbore, determining where to drill the wellbore within the subsurface location, or a combination thereof.

## Brief Description of the Drawings

The accompanying drawings, which are incorporated in and constitute a part of this specification, illustrate embodiments of the present teachings and together with the description, serve to explain the principles of the present teachings. In the figures:

**Figure 1** illustrates an example of a system that includes various management components to manage various aspects of a geologic environment, according to an embodiment.

**Figure 2A** illustrates a velocity model showing the velocity of a received signal in the x and z directions, according to an embodiment.

**Figure 2B** illustrates a grid of point scatterers in alternating patches of four scatterers of the model seen in **Figure 2A,** according to an embodiment.

**Figure 2C** illustrates a first encoding applied to the grid of point scatterers seen in **Figure 2B** where the original point scatterers have been shifted in the z direction, according to an embodiment.

**Figure 2D** illustrates a second orthogonal encoding applied to the grid of point scatterers seen in **Figure 2B** where the original point scatterers have been shifted in the x direction, according to an embodiment.

**Figure 3A** illustrates an image of standard RTM PSFs generated with the grid of point scatterers seen in **Figure 2B,** according to an embodiment.

**Figure 3B** illustrates an image of standard RTM PSFs generated with the grid of point scatterers seen in **Figure 2B** but where only every second point scatterer is used, according to an embodiment.

**Figure 4A** illustrates an image of a first set of interleaved PSFs separated from image seen in **Figure 3A** using the method described herein, according to an embodiment.

**Figure 4B** illustrates an image of a second set of interleaved PSFs separated from image seen in **Figure 3A** using the method described herein, according to an embodiment.

**Figure 4C** illustrates an image of a third set of interleaved PSFs separated from image seen in **Figure 3A** using the method described herein, according to an embodiment.

**Figure 4D** illustrates an image of a fourth set of interleaved PSFs separated from image seen in **Figure 3A** using the method described herein, according to an embodiment.

**Figure 5** illustrates a flowchart of the method described herein, according to an embodiment.

**Figure 6** illustrates a schematic view of a computing system for performing at least a portion of the method described herein, according to an embodiment.

**Detailed Description**

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc., may be used herein to describe various elements, these elements should not be limited by these terms. These terms are used to distinguish one element from another. For example, a first object or step could be termed a second object or step, and, similarly, a second object or step could be termed a first object or step, without departing from the scope of the invention. The first object or step, and the second object or step, are both objects or steps, respectively, but they are not to be considered the same object or step.

The terminology used in the description of the invention herein is for the purpose of describing particular embodiments and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combination of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context.

Those with skill in the art will appreciate that while some terms in this disclosure may refer to absolutes, *e.g., all* of the components of a wavefield, *all* source receiver traces, *each* of a plurality of objects, etc., the methods and techniques disclosed herein may also be performed on fewer than all of a given thing, *e.g.*, performed on one or more components and/or performed on one or more source receiver traces. Accordingly, in instances in the disclosure where an absolute is used, the disclosure may also be interpreted as referring to a subset.

*System Overview*

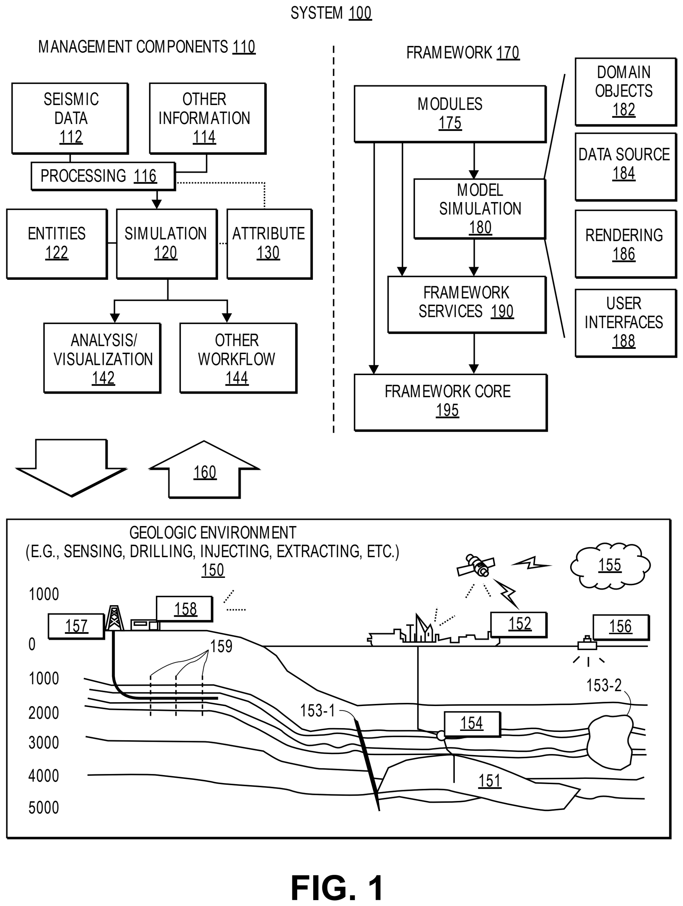

**Figure 1** illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of **Figure 1,** the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT® NET® framework (Redmond, Washington), which provides a set of extensible object classes. In the .NET® framework, an object class encapsulates a module of reusable code and associated data structures. Object classes may be used to instantiate object instances for use in by a program, script, etc. For example, borehole classes may define objects for representing boreholes based on well data.

In the example of **Figure 1,** the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of **Figure 1,** the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE™ reservoir simulator (SLB, Houston Texas), the INTERSECT™ reservoir simulator (SLB, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

As an example, the simulation component 120 may include one or more features of a simulator such as SYMMETRY™ software (SLB, Houston, Texas). More particularly, SYMMETRY™ may process workflows in a single integrated environment with accurate thermodynamic fluid representation and consistent modeling across multiple disciplines including process, production, and HSE. The simulator integrates steady-state and transient (e.g., dynamic) analyses that can be tailored for each domain. This approach enables users to optimize processes in upstream, midstream, and downstream sectors while maximizing profits and minimizing capital expenditures. It may also help reduce emissions, energy consumption, and waste.

As an example, the simulation component 120 may include one or more features of a simulator such as PIPESIM™ (SLB, Houston, Texas). More particularly, PIPESIM™ is steady-state multiphase flow simulator that incorporates the three areas of flow modeling: multiphase flow, heat transfer and fluid behavior.

As an example, the simulation component 120 may include one or more features of a simulator such as OLGA™ (SLB, Houston, Texas). More particularly, OLGA™ is a dynamic multiphase flow simulator that models transient flow (e.g., time-dependent behaviors) to maximize production potential. Transient modeling is a component for feasibility studies and field development design. Dynamic simulation is useful in deep water and is used in both offshore and onshore developments to investigate transient behavior in pipelines and wellbores. Transient simulation with the OLGA™ simulator provides an added dimension to steady-state analysis by predicting system dynamics, such as time-varying changes in flow rates, fluid compositions, temperature, solids deposition, and operational changes.

In an example embodiment, the management components 110 may include features of a commercially available framework such as the PETREL® seismic to simulation software framework (SLB, Houston, Texas). The PETREL® framework provides components that allow for optimization of exploration and development operations. The PETREL® framework includes seismic to simulation software components that may output information for use in increasing reservoir performance, for example, by improving asset team productivity. Through use of such a framework, various professionals (e.g., geophysicists, geologists, and reservoir engineers) may develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN® framework environment (SLB, Houston, Texas) allows for integration of add-ons (or plug-ins) into a PETREL® framework workflow. The OCEAN® framework environment leverages .NET® tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

**Figure** 1 also shows an example of a framework 170 that includes a model simulation layer 180 along with a framework services layer 190, a framework core layer 195 and a modules layer 175. The framework 170 may include the commercially available OCEAN® framework where the model simulation layer 180 is the commercially available PETREL® model-centric software package that hosts OCEAN® framework applications. In an example embodiment, the PETREL® software may be considered a data-driven application. The PETREL® software may include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of Figure **1,** the model simulation layer 180 may provide domain objects 182, act as a data source 184, provide for rendering 186 and provide for various user interfaces 188. Rendering 186 may provide a graphical environment in which applications may display their data while the user interfaces 188 may provide a common look and feel for application user interface components.

As an example, the domain objects 182 may include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and displays information (e.g., to display the well as part of a model).

In the example of **Figure 1,** data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project may be accessed and restored using the model simulation layer 180, which may recreate instances of the relevant domain objects.

In the example of **Figure 1,** the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, **Figure 1** shows a satellite in communication with the network 155 that may be configured for communications, noting that the satellite may additionally or instead include circuitry for imagery (e.g., spatial, spectral, temporal, radiometric, etc.).

**Figure 1** also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL® software, for example, that operates on seismic data, seismic attribute(s), etc. As an example, a workflow may be a process implementable in the OCEAN® framework. As an example, a workflow may include one or more worksteps that access a module such as a plug-in (e.g., external executable code, etc.).

A network architecture for drilling operations typically involves a multi-layered setup designed to handle the complexities of rig environments, as shown in **Figure 1.** The infrastructure may be segmented into distinct network zones, such as an information technology (IT) network, an operational technology (OT) network, and a rig network, to ensure security and manageability.

The IT network may include centralized support and monitoring systems, such as the Service Provider Central Support Network, which interacts with the rig networks via secure communication channels. The OT network may operate within a more restrictive environment, managing essential control systems and acquisition networks, including surface and downhole data acquisition devices. Each network segment is further isolated using firewalls and hypervisor technologies, enabling network segmentation and perimeter security.

The rig network connects critical edge devices, such as drilling control units, acquisition systems, and other wellsite equipment which perform various automation and data processing tasks. These edge devices often operate with limited bandwidth, making it challenging to transmit large amounts of data in real time. Therefore, a robust strategy for monitoring and data collection is preferred to ensure efficient operation without overwhelming the network.

**METHOD FOR REDUCING A COMPUTATIONAL COST FOR IMPROVING SUBSURFACE IMAGES WITH DENSE POINT SPREAD FUNCTIONS USING ENCODED BORN MODELLING AND ATTRIBUTE MIGRATION**

Attribute migration refers to computing two migrations with the same data, the second one involving the original data multiplied by some attribute. The division of the two migrated images then gives an image of the attribute. This idea is extended to performing the division at every time step (before time integration) of the imaging condition to improve handling of multi-arrivals. Furthermore, to make the approach work well in the presence of multi-scattering effects, using multiple orthogonal encodings and recursively separating the image contributions from encoded interleaved grids of PSFs may be done. With this approach, it is possible to increase the resolution of PSF spatial sampling to powers of 2 (e.g., 2:1, 4:1...).

Some examples focus on computation of PSFs from RTM, but it is equally applicable to one-way wavefield extrapolation migration (WEM). The general idea of encoding the perturbation in Born modelling and using attribute migration to separate out the encoded effects from an image may have other applications.

In a double migration method, two migrations may be computed with the same data, the second one involving a migration operator multiplied by the specular reflection angle. The division of the two migrated images then gives an image of specular angle along the reflectors. In this original attribute migration idea, the attribute is the specular reflection angle. This idea has also been employed, treating offset as the attribute, to produce surface offset gathers (SOGs) from wavefield extrapolation migration. In this case the data traces are scaled by their offset for the second migration. After the division the estimated offset at each spatial location in the image is used to bin the original image to produce SOGs.

According to certain embodiments, attribute migration may be employed and an attribute may be chosen to identify subsets of Born modelled data. In particular, the point scatterers used for the single scattering modelling may be encoded which in turn encodes the diffractions present in generated seismograms. With $x, r, t$ and $T$ denoting the spatial image location, receiver location, time and maximum time respectively, in certain embodiments attribute migration may include, assuming a zero-lag cross correlation imaging condition, setting a dense grid of point scatterers, G, and weighting "interleaved" grids of scatterers in $G$ differently, $G_w$. In certain embodiments, for each shot or received data input, a forward model of a source wavefield, $S(x, t)$ may be calculated. Born modelling with G may be performed to obtain data $d(r, t)$. Born modelling with $G_w$ may be performed to obtain weighted data $d_w(r, t)$. In certain embodiments, data $d(r, t)$ may be backpropagated, or time reversed, to obtain a receiver wavefield, $R(x, t)$. In certain embodiments, weighted data $d_w(r, t)$ may be backpropagated, or time reversed, to obtain a weighted receiver wavefield, $R_w(x, t)$, In certain embodiments, an interleaved grid weight may be calculated according to equation 1:

$$w(\boldsymbol{x}, t) = \frac{I_w(x,t)}{I(x,t)} = \frac{S(x,T-t)*R_w\ (x,t)}{S(x,T-t)*R(x,t)} \tag{1}$$

In certain embodiments, bin image contribution may be obtained according to the calculated weight, $I(\boldsymbol{x}, t, w) \subseteq I(\boldsymbol{x}, t)$, while interleaved grid images may be formed according to equation 2:

$$I(\boldsymbol{x}, w) = \sum_t I\ (\boldsymbol{x}, t, w) \tag{2}$$

According to certain embodiments, there may be a stack over shots to form the final image, and it would be equally applicable if the image was being further partitioned by a surface offset or angle, for example.

There is a single arrival assumption that underlies the calculation of the interleaved grid weight as specified in equation 1. Whilst this assumption may be less valid if the division is performed on formed shot images, for example, after time integration, the calculation at every time step can still be erroneous due to multi-arrivals. Considering a single point in space and time with multi-arrivals, the calculation in equation 1 amounts to:

$$\sum_i a_i w_i \Big/ \sum_i a_i$$

where $a$ is a weighted average, but where the weights are the data amplitudes, $\{a_i\}$. As the data amplitudes are not strictly positive, there is no guarantee that the calculated attribute even lies within bounds of the original attributes employed, $\{w_i\}$. In practice the division in equation 1 is implemented as a local L2 inversion within small spatial windows.

According to certain embodiments, attribute migration works well, even in the presence of multi-scattering from discontinuities in the velocity model, with two distinct weights {-1,1} encoding the scatterers to separate into two interleaved grids. However, the use of four distinct weights to identify four interleaved grids in 2D complex model experiments may show some significant leakage between the PSFs in each output image, particularly where the residual multi-scattering was strongest (e.g. above salt). In certain embodiments, extending the approach to use multiple orthogonal encodings of the scatterers may help to produce acceptable results in these cases.

For example, four neighbouring scatterers/PSFs in 2D and two orthogonal encodings are shown below:

$\begin{bmatrix} a & b \\ c & d \end{bmatrix}$ and encodings $\begin{bmatrix} -1 & +1 \\ -1 & +1 \end{bmatrix}, \begin{bmatrix} -1 & -1 \\ +1 & +1 \end{bmatrix}$ In certain embodiments, attribute migration may be expanded to use two encodings to generate data and images, a weight calculated from the first encoding will separate $\begin{bmatrix} a & 0 \\ c & 0 \end{bmatrix}$ and

$\begin{bmatrix} 0 & b \\ 0 & d \end{bmatrix}$. These can be further separated into $\begin{bmatrix} a & 0 \\ 0 & 0 \end{bmatrix}, \begin{bmatrix} 0 & 0 \\ c & 0 \end{bmatrix}, \begin{bmatrix} 0 & b \\ 0 & 0 \end{bmatrix}$ and $\begin{bmatrix} 0 & 0 \\ 0 & d \end{bmatrix}$ using the weight

calculated from the second encoding. This recursive separation using orthogonal encodings with {-1,1} weights work in 3D with 3 encodings.

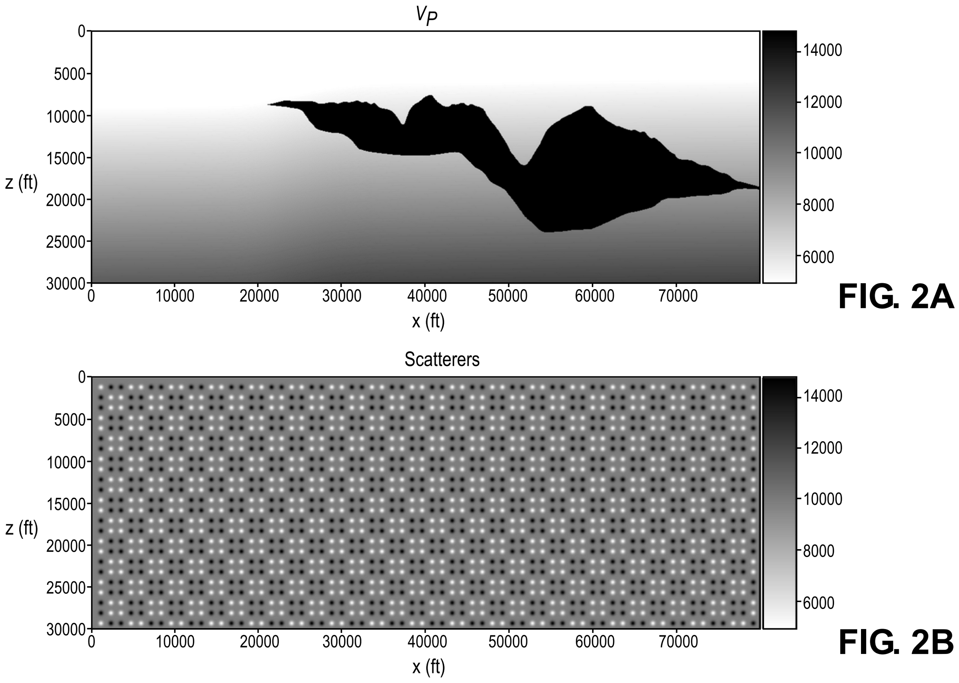

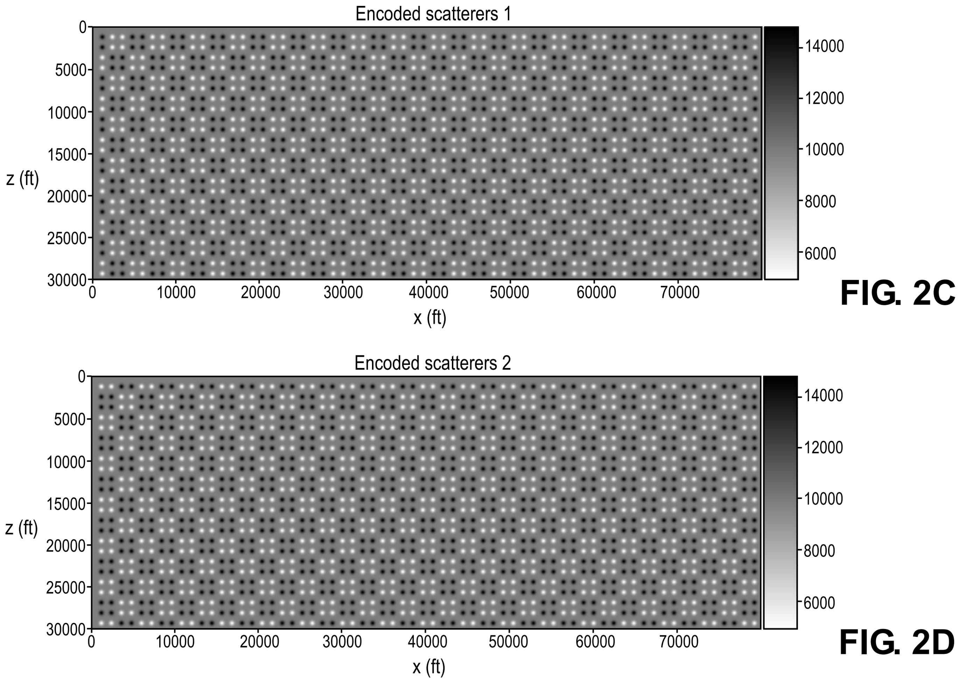

In certain embodiments, generation of PSFs in the Sigsbee model may be illustrated as seen in **Figure 2A.** According to an embodiment, 22 equally spaced shots may be used from a towed marine geometry with a limited offset of 6000 *ft*. PSFs may be generated using a Ricker wavelet with a peak frequency of 10 *Hz*. We set the scatterer spacing to be the maximum dominant wavelength in the sediments ($v_{max}/f_{peak}$ = 1200 *ft*). Alternating polarity may be employed for the original grid of scatterers, alternating in patches of four scatterers. The original grid of point scatterers may be seen in **Figure 2B,** while two different orthogonal encodings applied to the original grid of point scatterers may be seen in **Figure 2C** and **Figure 2D,** respectively, and look like shifted (in x and z) versions of the original scatterers.

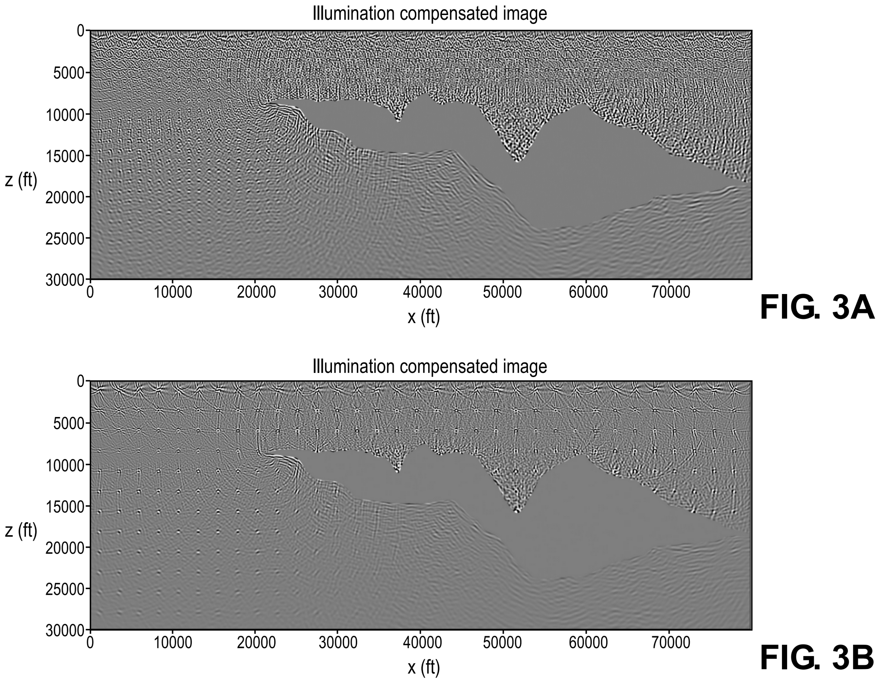

The limited acquisition combined with the complexity of the velocity model may make it difficult to clearly cut out PSFs (and revert polarity as necessary) from the image seen in **Figure 3A. Figure 3A** illustrates an image of standard RTM PSFs generated with the original grid of scatterers, while **Figure 3B** specifically shows the image obtained from using every second scatterer, where extracting PSFs is now possible.

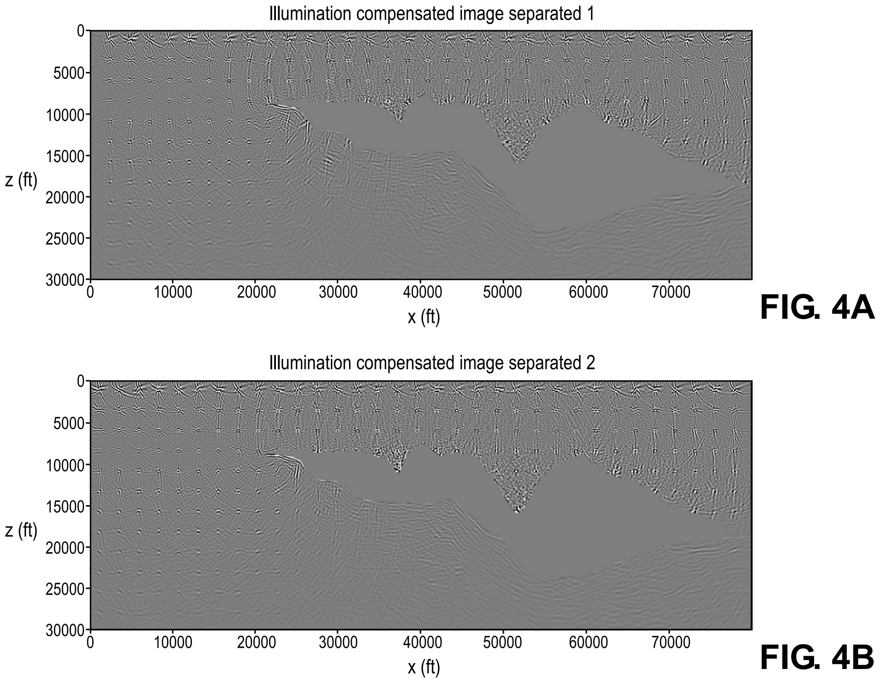

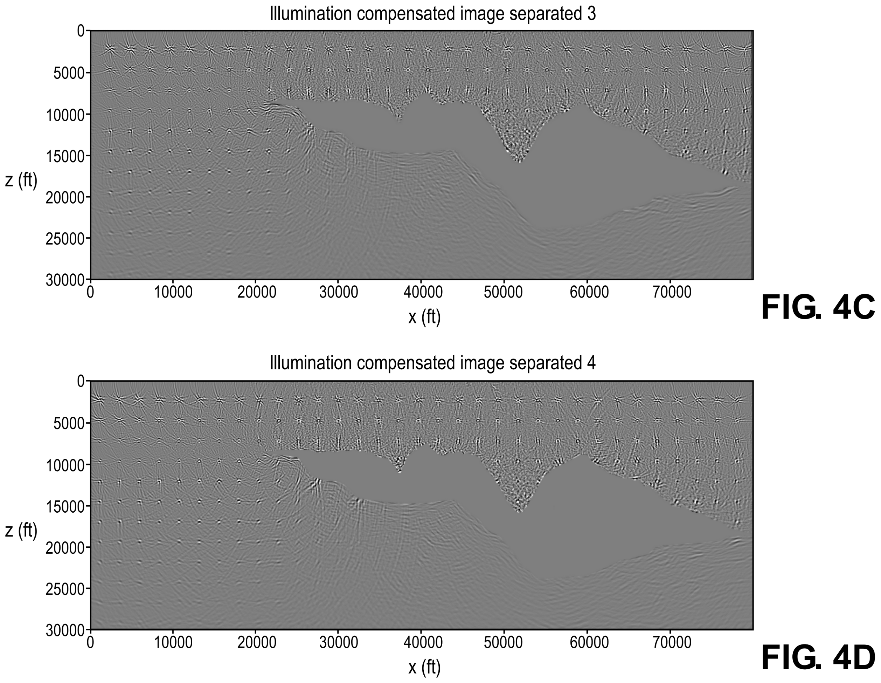

According to certain embodiments, as shown in **Figures 4A-4D,** the four sets of interleaved PSFs separated by the current method may be seen. There is little leakage of PSFs in these separated images. For example, **Figure 4B** can be compared against the image seen in **Figure 3B.** There is a very high correlation between these two images. Most differences are likely to come from residual multi-scattered energy that is expected to differ between the two experiments as the density of scatterers differ. Whilst neither image can be considered more accurate than the other, it might be worth noting that the approach described herein tends to spread this spurious energy across the different grids of PSFs seen in **Figures 4A-4D,** potentially reducing their relative importance in each grid.

Considering the number of propagations required to compute PSFs as a proxy for computational cost, standard PSFs cost 3 propagations (in 2D and 3D). Increasing resolution 2:1 by computing independent interleaved grids of PSFs would have 12 and 24 propagations performed in 2D and 3D respectively. In certain embodiments, the current approach may perform 7 propagations in 2D, and 9 propagations in 3D. In certain embodiments, the means for recursive separation may extend to increasing resolution by powers of 2, that is $2^N$:1. The number of orthogonal encodings performed using {-1,1} weights may be N*nD, where nD is the dimension of the computation. The number of propagations required can then be derived through the general formula, 2*(N*nD+1)+1, highlighting huge savings for N>1 in certain embodiments.

To perform the separation at every time step of the zero-lag cross correlation imaging condition would include backpropagating the original Born modelled data as well as the data from all the encodings in lockstep at the imaging time step (not the propagation time step). This would imply the use of extra computational memory to hold wavefield variables for each propagation of encoded data or schemes to utilise disk input/output operations. Alternatively, at reduced accuracy handling multi-arrivals, in certain embodiments, the approach may be applied after time integration of the imaging condition or after running each propagation sequentially. In certain embodiments, applying the approach for 2D images after time integration of the imaging condition may accelerate the propagation and stabilize division, separation, and imaging using GPUs. There may also be an increase in storage for the images, which may already be significant if working with offset or angle partitioned images. However, according to certain embodiments, this approach may be used when performing detailed amplitude inversions targeting only regions where the wavelength of the illumination problem is not sampled sufficiently with a standard computation of a single grid of non-overlapping PSFs.

In certain embodiments, the focus may be on the computation of PSFs from RTM as discussed above, however in other embodiments, the encoding of the perturbation in Born modelling and use of attribute migration to separate out the encoded effects from an image may be equally applicable, for example, to one-way wavefield extrapolation migration (WEM) among other applications.

*Exemplary Method*

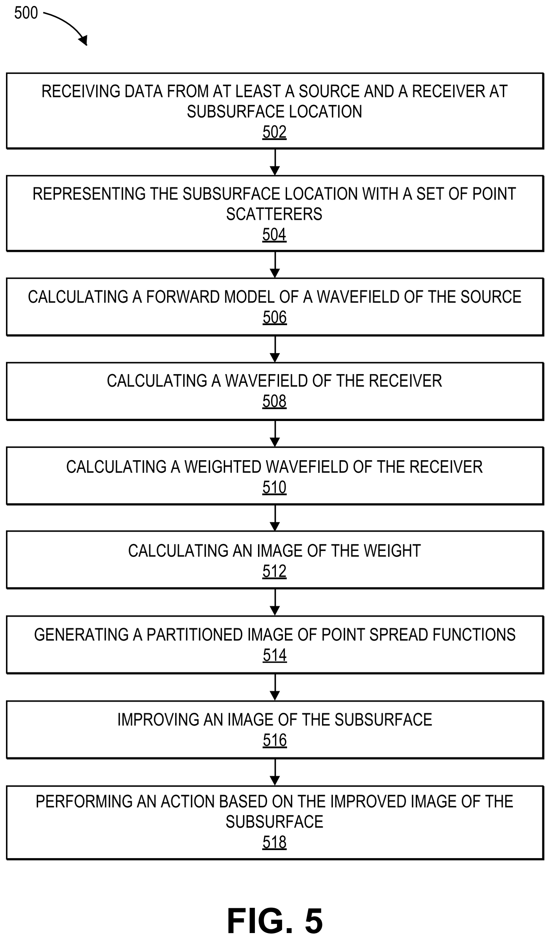

Figure 5 illustrates a flowchart of a method 500 for reducing a computational cost for improving subsurface images. An illustrative order of the method 500 is provided below; however, one or more portions of the method 500 may be performed in a different order, simultaneously, repeated, or omitted. At least a portion of the method 500 may be performed using a computing system.

In certain embodiments, the method 500 includes receiving data from at least one source and one receiver disposed at a subsurface location, as at 502. In an example, the data received may include the position of the source at the subsurface location, the position of the receiver at the subsurface location as well as the characteristics of the signal generated by the source.

According to certain embodiments, the method 500 includes representing the subsurface location with a set of point scatterers, as at 504. In an example, the subsurface location may be represented by a dense grid of point scatterers leading to overlapping PSFs.

According to certain embodiments, the method 500 includes calculating a forward model of a wavefield of the source based on a position of the source within the subsurface location, as at 506.

According to certain embodiments, the method 500 includes calculating a wavefield of the receiver based on a position of the receiver within the subsurface location, as at 508. Calculating the wavefield of the receiver may include generating a first set of Born modelled data from the set of point scatterers and backpropagating the first set of Born modelled data to form an image comprising a plurality of unweighted point spread functions (PSFs).

According to certain embodiments, the method 500 includes calculating a weighted wavefield of the receiver based on the position of the receiver within the subsurface location, as at 510. Calculating the weighted wavefield of the receiver may include encoding the set of point scatterers with a weight characterizing each of the point scatterers to form a weighted set of point scatterers, generating a second set of Born modelled data from the weighted set of point scatterers, and backpropagating the second set of Born modelled data to form an image comprising a plurality of weighted PSFs.

According to certain embodiments, the method 500 includes calculating an image of the weight based on the plurality of weighted PSFs and the plurality of unweighted PSFs, as at 512. Calculating the image of the weight may include dividing the weighted image of PSFs by the unweighted image of PSFs. In certain embodiments, calculating the image of the weight may include cross-correlating the forward model of the wavefield of the source with the weighted wavefield of the receiver to obtain a first input, cross-correlating the forward model of the wavefield of the source with the wavefield of the receiver to obtain a second input, and dividing the first input by the second input. In certain embodiments, dividing the first input by the second input is performed as a local inversion in a small spatial window. In certain embodiments, calculating the image of the weight and generating the partitioned image of PSFs may be performed for each source, after time integration of an imaging condition, or at each contributing time step of an imaging condition, before time integration. In certain embodiments, calculating the image of the weight may be performed for multiple encodings of the set of point scatterers. Additionally, calculating the forward model of the wavefield of the source, the wavefield of the receiver, or the weighted wavefield of the receiver may include shot-profile wavefield extrapolation.

According to certain embodiments, the method 500 includes generating a partitioned image of PSFs based on the image of the weight, as at 514. Generating the partitioned image of PSFs based on the image of the weight may include binning the image comprising the plurality of unweighted PSFs based on the image of the weight, to separate out any overlapping PSFs. In certain embodiments, generating the partitioned image of PSFs may include recursively separating image contributions from multiple encodings of the set of point scatterers.

According to certain embodiments, the method 500 includes improving an image of the subsurface location, as at 516. Improving an image of the subsurface location may include extracting PSFs from the partitioned image of PSFs and using them in a forward modelling or inversion scheme to improve an image of the subsurface location.

According to certain embodiments, the method 500 includes performing an action based on the improved image of the subsurface location, as at 518. Performing the action may include generating or transmitting a signal that recommends, instructs, or causes an action to occur. The action may include a physical action. The physical action may include varying the seismic acquisition system used to acquire seismic data (for instance source and receiver positions, type of source being used), varying a weight or torque on a drill bit that is drilling a wellbore, varying a trajectory of the wellbore, varying a rate or concentration of a fluid being pumped into the wellbore, determining where to drill the wellbore within the subsurface location, or a combination thereof.

*Exemplary Computing System*

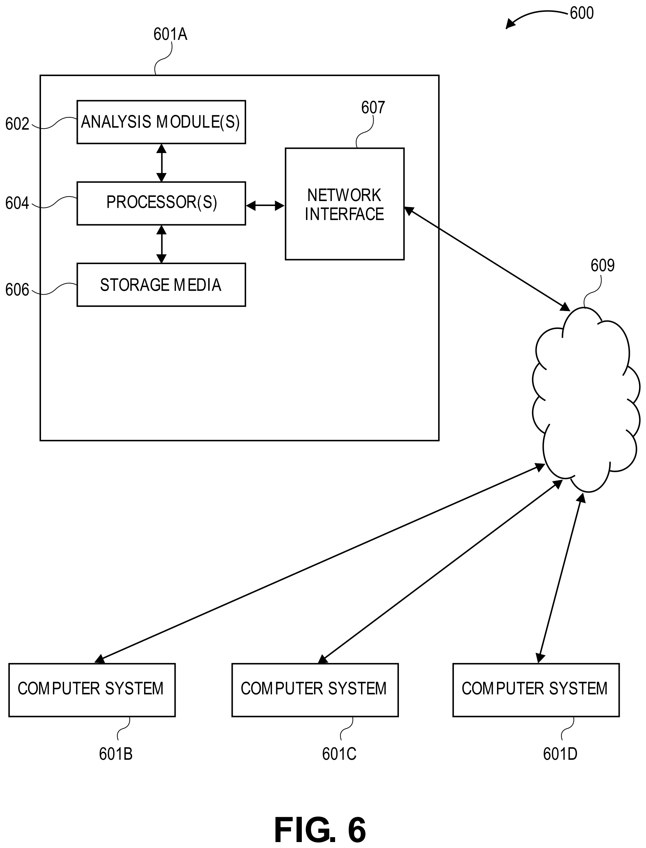

In some embodiments, the methods of the present disclosure may be executed by a computing system. **Figure 6** illustrates an example of such a computing system 600, in accordance with some embodiments. The computing system 600 may include a computer or computer system 601A, which may be an individual computer system 601A or an arrangement of distributed computer systems. The computer system 601A includes one or more analysis modules 602 that are configured to perform various tasks according to some embodiments, such as one or more methods disclosed herein. To perform these various tasks, the analysis module 602 executes independently, or in coordination with, one or more processors 604, which is (or are) connected to one or more storage media 606. The processor(s) 604 is (or are) also connected to a network interface 607 to allow the computer system 601A to communicate over a data network 609 with one or more additional computer systems and/or computing systems, such as 601B, 601C, and/or 601D (note that computer systems 601B, 601C and/or 601D may or may not share the same architecture as computer system 601A, and may be located in different physical locations, e.g., computer systems 601A and 601B may be located in a processing facility, while in communication with one or more computer systems such as 601C and/or 601D that are located in one or more data centers, and/or located in varying countries on different continents).

A processor may include a microprocessor, microcontroller, processor module or subsystem, programmable integrated circuit, programmable gate array, or another control or computing device.

The storage media 606 may be implemented as one or more computer-readable or machine-readable storage media. Note that while in the example embodiment of **Figure 6** storage media 606 is depicted as within computer system 601A, in some embodiments, storage media 606 may be distributed within and/or across multiple internal and/or external enclosures of computing system 601A and/or additional computing systems. Storage media 606 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY® disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

It should be appreciated that computing system 600 is merely one example of a computing system, and that computing system 600 may have more or fewer components than shown, may combine additional components not depicted in the example embodiment of **Figure 6,** and/or computing system 600 may have a different configuration or arrangement of the components depicted in **Figure 6.** The various components shown in **Figure 6** may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 600, **Figure 6),** and/or through manual control by a user who may make determinations regarding whether a given step, action, template, model, or set of curves has become sufficiently accurate for the evaluation of the risk index.

While any discussion of or citation to related art in this disclosure may or may not include some prior art references, applicant neither concedes nor acquiesces to the position that any given reference is prior art or analogous prior art.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to explain the principles of the invention and its practical applications, to thereby enable others skilled in the art to utilize the invention and various embodiments with various modifications as are suited to the particular use contemplated.

**Claims**

1. A method for improving subsurface images, the method comprising:

   receiving data from a source and a receiver disposed at a subsurface location;
   representing the subsurface location with a set of point scatterers;
   calculating a wavefield of the receiver based on the set of point scatterers and the data, wherein the data comprises a position of the receiver within the subsurface location;
   calculating a weighted wavefield of the receiver based on a weighted set of the point scatterers and the position of the receiver within the subsurface location;

calculating an image of a weight based on the wavefield of the receiver and the weighted wavefield of the receiver; and

generating a partitioned image of point spread functions (PSFs) based on the image of the weight.

2. The method of claim 1, further comprising receiving the data from a plurality of sources and a plurality of receivers disposed at the subsurface location, preferably further comprising generating a plurality of partitioned images of PSFs, wherein each one of the partitioned images corresponds to one of the sources, one of the receivers, a determined surface offset, or a determined angle.

3. The method of claim 1 or 2, wherein the set of point scatterers representing the subsurface comprises a grid of point scatterers.

4. The method of any one of the preceding claims, wherein calculating the weighted wavefield of the receiver comprises:

encoding the set of point scatterers with a weight characterizing each of the point scatterers to form the weighted set of point scatterers;

generating a set of Born modelled data from the weighted set of point scatterers; and

backpropagating the set of Born modelled data to form an image comprising a plurality of weighted PSFs.

5. The method of claim 4, further comprising :

calculating multiple weighted wave fields of the receiver based on multiple encodings of the set of point scatterers;

calculating multiple images of the weight based on the multiple weighted wavefields of the receiver; and

using the multiple images of the weight to generate the partitioned image of PSFs, preferably further comprising:

encoding the set of point scatterers using a plurality of orthogonal encodings; and

forming the partitioned image of PSFs recursively.

6. The method of any one of the preceding claims, further comprising improving an image of the subsurface location based on the partitioned image of PSFs, preferably further comprising performing an action based on the improved image of the subsurface location.

7. A computing system, comprising:

one or more processors; and

a memory system comprising one or more non-transitory computer-readable media storing instructions that, when executed by at least one of the one or more processors, cause the computing system to perform operations, the operations comprising:

receiving data from at least one source and at least a receiver disposed at a subsurface location;

representing the subsurface location with a set of point scatterers;

calculating a forward model of a wavefield of the source;

calculating a wavefield of the receiver based on the set of point scatterers;

calculating a weighted wavefield of the receiver based on the set of point scatterers;

calculating a weighted image of point spread functions (PSFs) based upon the weighted wavefield of the receiver;

calculating an unweighted image of PSFs based upon the wavefield of the receiver;

calculating an image of a weight based on the weighted image of PSFs, the unweighted image of PSFs, and the forward model of the wavefield of the source; and

generating a partitioned image of PSFs based on the image of the weight.

8. The computing system of claim 7, wherein calculating the forward model of a wavefield of the source comprises calculating a forward model of a wavefield of the source based on a position of the source within the subsurface location.

9. The computing system of claim 7 or 8, wherein calculating the wavefield of the receiver comprises generating a first set of Born modelled data from the set of point scatterers and a position of the receiver within the subsurface location, wherein calculating the unweighted image of PSFs preferably comprises backpropagating the first set of Born modelled data to form an image comprising a plurality of unweighted PSFs.

10. The computing system of any one of the claims 7 - 9, wherein calculating the weighted wavefield of the receiver comprises:

encoding the set of point scatterers with a weight characterizing each of the point scatterers to form a weighted set of point scatterers; and
generating a second set of Born modelled data from the weighted set of point scatterers, wherein calculating the weighted image of PSFs preferably comprises backpropagating the second set of Born modelled data to form an image comprising a plurality of weighted PSFs.

11. The computing system of any one of the claims 7 - 10, wherein calculating the image of the weight based on the weighted image of PSFs, the unweighted image of PSFs comprises, and the forward model of a wavefield of the source:

combining or cross-correlating the forward model of the wavefield of the source with the weighted wavefield of the receiver to obtain a first input;
combining or cross-correlating the forward model of the wavefield of the source with the wavefield of the receiver to obtain a second input; and
dividing the first input by the second input.

12. The computing system of any one of the claims 7 - 11, wherein generating the partitioned image of PSFs based on the image of the weight comprises binning the image comprising the plurality of unweighted PSFs based on the image of the weight and separating out any overlapping PSFs.

13. The computing system of any one of the claims 7 - 12, wherein calculating the image of the weight and generating the partitioned image of PSFs comprises:

calculating the image of the weight and generating the partitioned image of PSFs at every contributing time step before time integration of an imaging condition; or
calculating the image of the weight and generating the partitioned image of PSFs after time integration of an imaging condition.

14. The computing system of any one of the claims 7 - 13, further comprising:

improving an image of the subsurface location using the partitioned image of PSFs; and
performing an action based on the improved image of the subsurface location, wherein performing the action comprises generating or transmitting a signal that instructs or causes an action to occur, wherein the action comprises a physical action, and wherein the physical action comprises varying the seismic acquisition system used to acquire seismic data including source and receiver positions and type of source being used, varying a weight or torque on a drill bit that is drilling a wellbore, varying a trajectory of the wellbore, varying a rate or concentration of a fluid being pumped into the wellbore, determining where to drill the wellbore within the subsurface location, or a combination thereof.

15. A non-transitory computer-readable medium storing instructions that, when executed by one or more processors of a computing system, cause the computing system to perform operations, the operations comprising:

receiving data from at least one source and at least a receiver disposed at a subsurface location;
representing the subsurface location with a set of point scatterers;
calculating a forward model of a wavefield of the source;
calculating a wavefield of the receiver based on the set of point scatterers, wherein calculating the wavefield of the receiver comprises:

generating a first set of Born modelled data from the set of point scatterers; and
backpropagating the first set of Born modelled data to form an image comprising a plurality of unweighted point spread functions (PSFs);

calculating a weighted wavefield of the receiver based on the set of point scatterers, wherein calculating the weighted wavefield of the receiver comprises:

encoding the set of point scatterers with a weight characterizing each of the point scatterers to form a weighted set of the point scatterers;
generating a second set of Born modelled data from the weighted set of point scatterers; and
backpropagating the second set of Born modelled data to form an image comprising a plurality of weighted PSFs;

calculating an image of a weight based on the plurality of weighted PSFs from the weighted wavefield of the receiver and the plurality of unweighted PSFs from the wavefield of the receiver, wherein calculating the image of the weight comprises:

combining or cross-correlating the forward model of the wavefield of the source with the weighted wavefield of the receiver to obtain a first input;
combining or cross-correlating the forward model of the wavefield of the source with the wavefield of the receiver to obtain a second input; and
dividing the first input by the second input;

generating a partitioned image of PSFs based on the image of the weight, wherein generating the partitioned image of PSFs based on the image of the weight comprises binning the image comprising the plurality of unweighted PSFs based on the image of the weight to separate out any overlapping PSFs;
improving an image of the subsurface location using the partitioned image of PSFs; and
performing an action based on the improved image of the subsurface location, wherein performing the action comprises generating or transmitting a signal that instructs or causes an action to occur, wherein the action comprises a physical action, and wherein the physical action comprises varying the seismic acquisition system used to acquire seismic data including source and receiver positions and type of source being used, varying a weight or torque on a drill bit that is drilling a wellbore, varying a trajectory of the wellbore, varying a rate or concentration of a fluid being pumped into the wellbore, determining where to drill the wellbore within the subsurface location, or a combination thereof.

SYSTEM 100

MANAGEMENT COMPONENTS 110

| SEISMIC DATA 112 | OTHER INFORMATION 114 |

PROCESSING 116

| ENTITIES 122 | SIMULATION 120 | ATTRIBUTE 130 |

| ANALYSIS/ VISUALIZATION 142 | OTHER WORKFLOW 144 |

FRAMEWORK 170

MODULES 175

MODEL SIMULATION 180

FRAMEWORK SERVICES 190

FRAMEWORK CORE 195

| DOMAIN OBJECTS 182 |
| DATA SOURCE 184 |
| RENDERING 186 |
| USER INTERFACES 188 |

160

GEOLOGIC ENVIRONMENT
(E.G., SENSING, DRILLING, INJECTING, EXTRACTING, ETC.)
150

1000

158

157

155

152

156

0

159

1000

2000

153-1

153-2

154

3000

4000

151

5000

## FIG. 1

FIG. 2A

$V_P$

x (ft)

z (ft)

FIG. 2B

Scatterers

x (ft)

z (ft)

Encoded scatterers 1

FIG. 2C

Encoded scatterers 2

FIG. 2D

EP 4 779 361 A1

Illumination compensated image

FIG. 3A

Illumination compensated image

FIG. 3B

Illumination compensated image separated 1

**FIG. 4A**

Illumination compensated image separated 2

**FIG. 4B**

Illumination compensated image separated 3

**FIG. 4C**

Illumination compensated image separated 4

**FIG. 4D**

500

RECEIVING DATA FROM AT LEAST A SOURCE AND A RECEIVER AT
SUBSURFACE LOCATION
502

REPRESENTING THE SUBSURFACE LOCATION WITH A SET OF POINT
SCATTERERS
504

CALCULATING A FORWARD MODEL OF A WAVEFIELD OF THE SOURCE
506

CALCULATING A WAVEFIELD OF THE RECEIVER
508

CALCULATING A WEIGHTED WAVEFIELD OF THE RECEIVER
510

CALCULATING AN IMAGE OF THE WEIGHT
512

GENERATING A PARTITIONED IMAGE OF POINT SPREAD FUNCTIONS
514

IMPROVING AN IMAGE OF THE SUBSURFACE
516

PERFORMING AN ACTION BASED ON THE IMPROVED IMAGE OF THE
SUBSURFACE
518

# FIG. 5

**FIG. 6**

Europäisches
Patentamt
European
Patent Office
Office européen
des brevets

# EUROPEAN SEARCH REPORT

**Application Number**

EP 26 15 2110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/357474 A1 (BAI JIANYONG [US] ET AL) 10 November 2022 (2022-11-10) | 1-13 | INV.<br>G01V1/28 |
| A | * claims 1, 6; figure 2 *<br>----- | 14,15 | |
| X | ROBIN P. FLETCHER ET AL: "Least-squares migration — Data domain versus image domain using point spread functions",<br>THE LEADING EDGE,<br>vol. 35, no. 2,<br>1 February 2016 (2016-02-01), pages 157-162, XP055275709,<br>US<br>ISSN: 1070-485X, DOI: 10.1190/tle35020157.1 | 1-13 | |
| A | * page 159, col. 1 ; page 157, col. 2; figures 3a-c *<br>* abstract *<br>----- | 14,15 | |
| X | CN 116 699 680 A (UNIV CHINA PETROLEUM EAST CHINA) 5 September 2023 (2023-09-05) | 1-13 | |
| A | * claim 1; figure 4 *<br>----- | 14,15 | **TECHNICAL FIELDS SEARCHED (IPC)**<br><br>G01V |

The present search report has been drawn up for all claims

| Place of search | Date of completion of the search | Examiner |
|---|---|---|
| The Hague | 4 June 2026 | Pitzer, Hanna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 26 15 2110

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2026

| Patent document cited in search report | Publication date | Patent family member(s) | Publication date |
|---|---|---|---|
| US 2022357474 A1 | 10-11-2022 | NONE | |
| CN 116699680 A | 05-09-2023 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63745371